# DEMANDE DE BREVET EUROPEEN

(11) **EP 4 508 975 A1**
(43) Date de publication de la demande: **19.02.2025**
(21) Numéro de dépôt: 24194480.0
(22) Date de dépôt: 14.08.2024
(51) Int. Cl.: A01G 9/02, A01G 9/28

(54) **UTILISATION D'UNE STRUCTURE TUBULAIRE POUR CULTIVER DES PLANTES ET MÉTHODE CORRESPONDANTE**

(30) Priorité: 17.08.2023 FR 2308746
(71) Demandeur: Brunone, René, 27950 Saint Marcel (FR)
(72) Inventeur: Brunone, René, 27950 Saint Marcel (FR)
(74) Mandataire: Lavoix

(57) **Abrégé**

La présente invention concerne l'utilisation d'une structure tubulaire (1) pour cultiver des plantes, la structure tubulaire (1) comprenant une paroi tubulaire de base (3) ayant un axe central (C) et présentant des premier et second bords à contour fermé (5, 7) à des première et seconde extrémités axiales opposées, lesdites première et seconde extrémités axiales étant ouvertes sur au moins 50% de leurs surfaces respectives. Le premier bord (5) est posé sur un sol (S). La paroi tubulaire de base (3) est remplie par un milieu de culture (M) tel qu'un terreau, communiquant avec le sol (S) à travers la première extrémité ouverte. Les plantes (P) sont plantées dans le milieu de culture (M).

## Description

La présente invention concerne la culture des plantes en bacs ou en pots.

Il est connu d'utiliser des pots pour cultiver des plantes. Ces plantes doivent être arrosées et nourries avec de l'engrais.

L'entretien de telles plantes est donc contraignant.

Dans ce contexte, l'invention vise à proposer une méthode pour la culture des plantes qui engendre moins de contraintes.

A cette fin, l'invention porte sur l'utilisation d'une structure tubulaire pour cultiver des plantes, la structure tubulaire comprenant une paroi tubulaire de base ayant un axe central et présentant des premier et second bords à contour fermé à des première et seconde extrémités axiales opposées, lesdites première et seconde extrémités axiales étant ouvertes sur au moins 50% de leurs surfaces respectives ;
le premier bord étant posé sur un sol ;
la paroi tubulaire de base étant remplie par un milieu de culture el qu'un terreau, communiquant avec le sol à travers la première extrémité ouverte ;
des plantes étant plantées dans le milieu de culture.

Du fait que la paroi tubulaire est remplie par un milieu de culture communiquant avec le sol à travers la première extrémité ouverte, il se produit des échanges entre le sol et le milieu de culture. Notamment, l'humidité peut remonter du sol à l'intérieur de la paroi tubulaire. Des vers de terre peuvent circuler entre le sol et le milieu de culture.

Ceci contribue à réduire les contraintes liées à la culture des plantes plantées dans la structure tubulaire.

L'utilisation peut présenter une ou plusieurs des caractéristiques ci-dessous, considérées individuellement ou selon toutes les combinaisons techniquement possibles :
- La première extrémité est ouverte sur au moins 90% de sa surface, de préférence sur 100% de sa surface.
- La paroi tubulaire de base présente des ouvertures, des coupelles faisant saillie radialement vers l'extérieur de la paroi tubulaire de base et étant placées immédiatement décalées vers le premier bord par rapport aux ouvertures.
- Les coupelles sont remplies par le milieu de culture, des plantes étant plantées dans le milieu de culture remplissant les coupelles.
- La structure tubulaire comprend au moins une deuxième paroi tubulaire coaxiale à la paroi tubulaire de base, présentant des premier et second bords à contour fermé à des première et seconde extrémités axiales opposées, lesdites première et seconde extrémités axiales étant ouvertes sur au moins 50% de leurs surfaces respectives, le premier bord étant posé sur le second bord e la paroi tubulaire de base.
- La paroi tubulaire de base et la deuxième paroi tubulaire sont bloquées en position l'une par rapport à l'autre par des reliefs complémentaires, formés sur le second bord de la paroi tubulaire de base et sur le premier bord de la deuxième paroi tubulaire.
- La paroi tubulaire de base et la deuxième paroi tubulaire sont bloquées en position l'une par rapport à l'autre par un axe engagé dans des anneaux solidaires de la paroi tubulaire de base et de la deuxième paroi tubulaire.
- La paroi tubulaire de base est en terre cuite.

Selon un second aspect, l'invention porte sur une méthode de culture de plantes, la méthode comprenant les étapes suivantes :
- obtenir une structure tubulaire comprenant une paroi tubulaire de base ayant un axe central et présentant des premier et second bords à contour fermé à des première et seconde extrémités axiales opposées, lesdites première et seconde extrémités axiales étant ouvertes sur au moins 50% de leurs surfaces respectives ;
- poser le premier bord sur un sol ;
- remplir la paroi tubulaire de base par un milieu de culture tel qu'un terreau, communiquant avec le sol à travers la première extrémité ouverte ;
- planter des plantes dans le milieu de culture.

D'autres caractéristiques et avantages de l'invention ressortiront de la description détaillée qui en est donnée ci-dessous, à titre indicatif et nullement limitatif, en référence aux figures annexées, parmi lesquelles :
- [Fig 1] la figure 1 est une vue de côté de la structure tubulaire utilisée dans l'invention ; et
- [Fig 2] la figure 2 est une vue de dessus de la structure tubulaire de la figure 1.

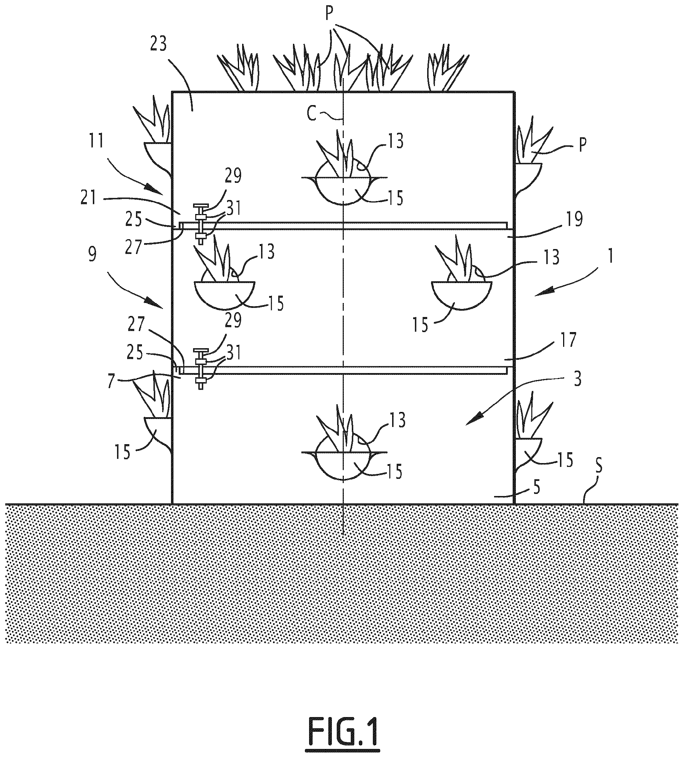

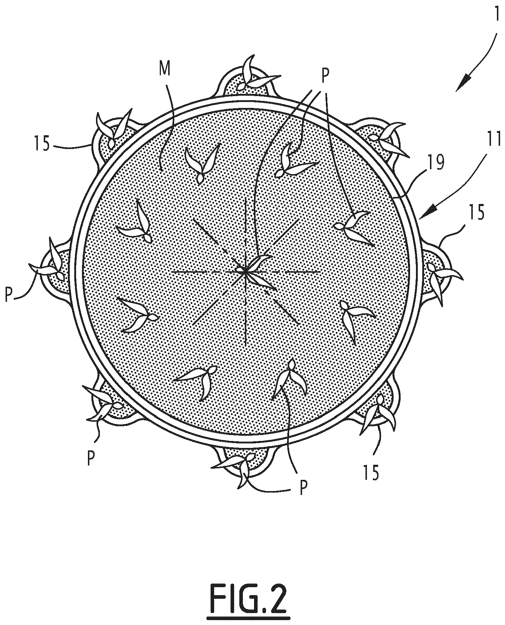

La structure tubulaire 1 représentée sur les figures 1 et 2 est utilisée pour cultiver des plantes.

Ces plantes sont par exemple des fleurs, des arbustes, ou tout autre type de plante adaptée pour être cultivé en pot.

La structure tubulaire 1 comprend une paroi tubulaire de base 3 ayant un axe central C et présentant des premier et second bords 5, 7 à contour fermé à des première et seconde extrémités axiales opposées.

Avantageusement, la structure tubulaire 1 comprend au moins une deuxième paroi tubulaire 9 coaxiale à la paroi tubulaire de base 3.

La deuxième paroi tubulaire 9 est posée sur la paroi tubulaire de base 3.

Dans l'exemple représenté, la structure tubulaire 1 une troisième paroi tubulaire 11, coaxiale à la paroi tubulaire de base 3.

La troisième paroi tubulaire 11 est posée sur la deuxième paroi tubulaire 9.

Dans une variante non représentée, la structure tubulaire 1 comprend seulement la paroi tubulaire de base, aucune autre paroi tubulaire n'étant posée sur la paroi tubulaire de base.

Dans une autre variante non représentée, la structure tubulaire 1 comprend seulement la paroi tubulaire de base et la deuxième paroi tubulaire, sans troisième paroi tubulaire.

Dans encore une autre variante non représentée, la structure tubulaire 1 comprend encore une ou plusieurs autres parois tubulaires posée sur la deuxième paroi tubulaire.

Les première et seconde extrémités axiales de la paroi tubulaire de base 3 sont ouvertes sur au moins 50% de leurs surfaces respectives.

La première extrémité, délimitée par le premier bord à contour fermé 5, est ouverte sur au moins 90% de sa surface, et de préférence est ouverte sur 100% de sa surface.

De même, la seconde extrémité, délimitée par le second bord à contour fermé 7, est ouverte sur au moins 90% de sa surface, et de préférence plus sur 100% de sa surface.

La paroi tubulaire de base est cylindrique. Perpendiculairement à l'axe central C, elle présente une section circulaire, constante sur toute sa hauteur axiale.

Elle présente par exemple un diamètre de 500 mm, et une hauteur axiale de 200 mm.

Le premier bord 5 de la structure tubulaire de base 3 est placé sur le sol S.

L'axe central C est perpendiculaire au sol S.

Dans la présente description, les termes haut, bas, supérieur, inférieur sont entendus suivant une direction perpendiculaire au sol S, correspondant à l'axe central C de la paroi tubulaire de base quand celle-ci est posée sur le sol S.

La paroi tubulaire de base 3 présente des ouvertures 13. Ces ouvertures 13 sont découpées dans la paroi tubulaire de base, et mettent en communication le volume interne de la paroi tubulaire de base 3 avec l'extérieur.

Elles sont réparties sur toute la périphérie de la paroi tubulaire de base 3.

Par exemple, les ouvertures 13 sont situées à 90° les unes des autres, autour de l'axe central C.

La paroi tubulaire de base 3 comporte encore des coupelles 15 faisant saillies radialement vers l'extérieur de la paroi tubulaire de base 3.

Les coupelles 15 font saillies à partir de la surface externe de la paroi tubulaire de base 3. Elles sont placées immédiatement décalées vers le premier bord à contour fermé 5 par rapport aux ouvertures 13.

En d'autres termes, les coupelles 15 sont placées sous les ouvertures 13.

Chaque coupelle 15 présente alors un côté concave tourné vers le haut, c'est-à-dire vers l'ouverture 13, et un côté convexe tourné vers le bas, c'est-à-dire vers le sol S.

Chaque coupelle 15 se rattache à la surface externe de la paroi tubulaire de base 13 le long d'une ligne ayant une forme générale en U, qui suit le bord inférieur de l'ouverture 13.

Ainsi, la partie inférieure de l'ouverture 13 débouche directement à l'intérieur de la coupelle 15, et la partie supérieure de l'ouverture 13 est située au-dessus de la coupelle 15.

La deuxième paroi tubulaire supérieure 9 est du même type que la paroi tubulaire de base 3.

Elle présente les mêmes dimensions que la première paroi tubulaire supérieure et la paroi tubulaire de base, notamment le même diamètre et la même hauteur.

Elle présente elle aussi des premier et second bords 17, 19 à contour fermé à des première et seconde extrémités axiales opposées.

Les première et seconde extrémités axiales sont ouvertes sur au moins 50% de leurs surfaces respectives, de préférence sur au moins 90% de leurs surfaces respectives, et encore de préférence sur 100% de leurs surfaces respectives.

La paroi tubulaire supérieure 9 comporte des ouvertures 13 et des coupelles 15 du même type que celle décrite en référence à la paroi tubulaire de base 3.

La troisième paroi tubulaire intermédiaire 11 est du même type que la paroi tubulaire de base 3.

Elle présente les mêmes dimensions que la deuxième paroi tubulaire 9 et la paroi tubulaire de base 3, notamment le même diamètre et la même hauteur.

Elle présente elle aussi des premier et second bords à contour fermé 21, 23 à ses extrémités axiales opposées. Ces première et seconde extrémités axiales sont ouvertes sur au moins 50% de leurs surfaces respectives, de préférence au moins 90% et encore de préférence 100%.

La troisième paroi tubulaire 11 comporte des ouvertures 13 et des coupelles 15 du même type que celle décrite en référence à la paroi tubulaire de base 3.

Le premier bord à contour fermé 17 de la deuxième paroi tubulaire 9 est posé sur le second bord à contour fermé 7 de la paroi tubulaire de base 3.

Le premier bord à contour fermé 17 de la deuxième paroi tubulaire 9 suit exactement le second bord à contour fermé 7 de la paroi tubulaire de base 3.

De même, le premier bord 21 de la troisième paroi tubulaire 11 est posé sur le second bord 19 de la deuxième paroi tubulaire 9.

Le premier bord 21 suit exactement le second bord 19 de la deuxième paroi tubulaire 9.

Ensemble, la paroi tubulaire de base 3, la deuxième paroi tubulaire 9 et la troisième paroi tubulaire 11 forment un récipient cylindrique creux, sans cloison interne.

La structure tubulaire 1 comporte des moyens pour bloquer en position la paroi tubulaire de base et la deuxième paroi tubulaire l'une par rapport à l'autre.

Selon une première variante de réalisation, ces moyens sont des reliefs complémentaires, formés sur le second bord 7 de la paroi tubulaire de base 3 et sur le premier bord 17 de la deuxième paroi tubulaire 9. Dans l'exemple représenté, le second bord 7 porte une nervure 25 à contour fermé. Le premier bord 17 porte une autre nervure à contour fermé 27, agencée radialement à l'intérieur de la nervure 21.

Selon une autre variante de réalisation, les moyens de blocage en position comprennent un axe 29, engagé dans des anneaux 31 solidaires de la paroi tubulaire de base 3 et de la deuxième paroi tubulaire 9.

La deuxième paroi tubulaire 9 et la troisième paroi tubulaire 11 sont bloquées en position l'une par rapport à l'autre par les mêmes moyens.

Typiquement, la paroi tubulaire de base est en terre cuite.

La deuxième paroi tubulaire et/ou la troisième paroi tubulaire sont dans le même matériau.

Comme indiqué ci-dessus, la structure tubulaire 1 est utilisée pour cultiver des plantes P en posant le premier bord 5 de la structure tubulaire de base 3 sur le sol S. La paroi tubulaire de base 3 est ensuite remplie par un milieu de culture M tel qu'un terreau.

Le milieu de culture M communique avec le sol à travers la première extrémité ouverte de la paroi tubulaire de base 3. Des plantes P sont plantées dans le milieu de culture M.

Quand la structure tubulaire 1 comprend une ou plusieurs autres parois tubulaires posées sur la paroi tubulaire de base, par exemple la deuxième paroi tubulaire 9 et la troisième paroi tubulaire 11, la ou chaque autre paroi tubulaire est elle aussi remplie par le milieu de culture M.

Les coupelles 15 sont également remplies par le milieu de culture M, celui-ci communicant avec le milieu de culture M remplissant le volume interne de la paroi tubulaire à travers les ouvertures 13.

Les plantes P sont plantées dans le milieu de culture M contenu dans les coupelles 15. Elles sont également plantées à la seconde extrémité ouverte de la paroi tubulaire située le plus haut.

Cette seconde extrémité appartient à la paroi tubulaire de base quand la structure tubulaire ne comporte pas d'autre paroi tubulaire.

## Revendications

1. Utilisation d'une structure tubulaire (1) pour cultiver des plantes, la structure tubulaire (1) comprenant une paroi tubulaire de base (3) ayant un axe central (C) et présentant des premier et second bords à contour fermé (5, 7) à des première et seconde extrémités axiales opposées, lesdites première et seconde extrémités axiales étant ouvertes sur au moins 50% de leurs surfaces respectives ;
le premier bord (5) étant posé sur un sol (S) ;
la paroi tubulaire de base (3) étant remplie par un milieu de culture (M) tel qu'un terreau, communiquant avec le sol (S) à travers la première extrémité ouverte ;
des plantes (P) étant plantées dans le milieu de culture (M).

2. Utilisation selon la revendication 1, dans laquelle la première extrémité est ouverte sur au moins 90% de sa surface, de préférence sur 100% de sa surface.

3. Utilisation selon la revendication 1 ou 2, dans laquelle la paroi tubulaire de base (3) présente des ouvertures (13), des coupelles (15) faisant saillie radialement vers l'extérieur de la paroi tubulaire de base (3) et étant placées immédiatement décalées vers le premier bord (5) par rapport aux ouvertures (13).

4. Utilisation selon la revendication 3, dans laquelle les coupelles (15) sont remplies par le milieu de culture (M), des plantes (P) étant plantées dans le milieu de culture (M) remplissant les coupelles (15).

5. Utilisation selon l'une quelconque des revendications précédentes, dans laquelle la structure tubulaire (1) comprend au moins une deuxième paroi tubulaire (9) coaxiale à la paroi tubulaire de base (3), présentant des premier et second bords (17, 19) à contour fermé à des première et seconde extrémités axiales opposées, lesdites première et seconde extrémités axiales étant ouvertes sur au moins 50% de leurs surfaces respectives, le premier bord (17) étant posé sur le second bord (7) de la paroi tubulaire de base (3).

6. Utilisation selon la revendication 5, dans laquelle la paroi tubulaire de base et la deuxième paroi tubulaire sont bloquées en position l'une par rapport à l'autre par des reliefs complémentaires (25, 27), formés sur le second bord (7) de la paroi tubulaire de base (3) et sur le premier bord (17) de la deuxième paroi tubulaire (9).

7. Utilisation selon la revendication 5, dans laquelle la paroi tubulaire de base (3) et la deuxième paroi tubulaire (9) sont bloquées en position l'une par rapport à l'autre par un axe (29) engagé dans des anneaux (31) solidaires de la paroi tubulaire de base (3) et de la deuxième paroi tubulaire (9).

8. Utilisation selon l'une quelconque des revendications précédentes, dans laquelle la paroi tubulaire de base (3) est en terre cuite.

9. Méthode de culture de plantes, la méthode comprenant les étapes suivantes :
- obtenir une structure tubulaire (1) comprenant une paroi tubulaire de base (3) ayant un axe central (C) et présentant des premier et second bords à contour fermé (5, 7) à des première et seconde extrémités axiales opposées, lesdites première et seconde extrémités axiales étant ouvertes sur au moins 50% de leurs surfaces respectives ;
- poser le premier bord (5) sur un sol (S) ;
- remplir la paroi tubulaire de base (3) par un milieu de culture (M) tel qu'un terreau, communiquant avec le sol (S) à travers la première extrémité ouverte ;
- planter des plantes (P) dans le milieu de culture (M).
